# EUROPEAN PATENT SPECIFICATION

(11) **EP 0 415 096 B1**
(45) Date of publication and mention of the grant of the patent: **13.07.1994**
(21) Application number: 90114514.4
(22) Date of filing: 27.07.1990
(51) Int. Cl.: H01G 9/00

(54) **Electrical double-layer capacitor**
Elektrischer Doppelschichtkondensator
Condensateur électrique à double couche

(30) Priority: 30.08.1989 JP 224024/89
(43) Date of publication of application: 06.03.1991
(73) Proprietor: Isuzu Motors Limited, Shinagawa-ku, Tokyo 140 (JP)
(72) Inventor: Kurabayashi, Ken, Chigasaki-shi, Kanagawa (JP); Tsuchiya, Yoshinobu, Fujisawa-shi, Kanagawa (JP); Niida, Yoriaki, Yamato-shi, Kanagawa (JP)
(74) Representative: Roth, Ronald, Dipl.-Ing.

(56) References cited:
- EP-A- 0 112 923
- JP-A-56 070 623
- PATENT ABSTRACTS OF JAPAN vol. 13, no. 168 (E-747)(3516) 21 April 1989 & JP-A-64-1219
- IEEE TRANSACTIONS ON COMPONENTS,HYBRIDS,AND MANUFACTURING vol. 11, no. 3, September 1988, NEW YORK US,pages 318 - 332; A. YOSHIDA ET AL.: "ALUMINIUM COLLECTOR ELECTRODES FORMED BY THE PLASMA SPRAYING METHOD FOR ELECTRIC DOUBLE-LAYER CAPACITORS"
- PATENT ABSTRACTS OF JAPAN vol. 12, no. 186 (C-500) 31 May 1988 & JP-A-62-292612

## Description

The present invention relates to an electrical double-layer capacitor wherein the contact resistance between a collecting electrode and a sintered polarising electrode is made small.

An electrical double-layer capacitor according to the preamble of the claim is known from EP-A 0 112 923. There, a double layer capacitor is disclosed which utilizes electric layers formed at the boundaries between polarised electrodes and an electrolyte. The polarised electrodes are made of carbon or activated carbon fiber whereas the conductive electrodes are formed as current collectors on the polarised electrodes.

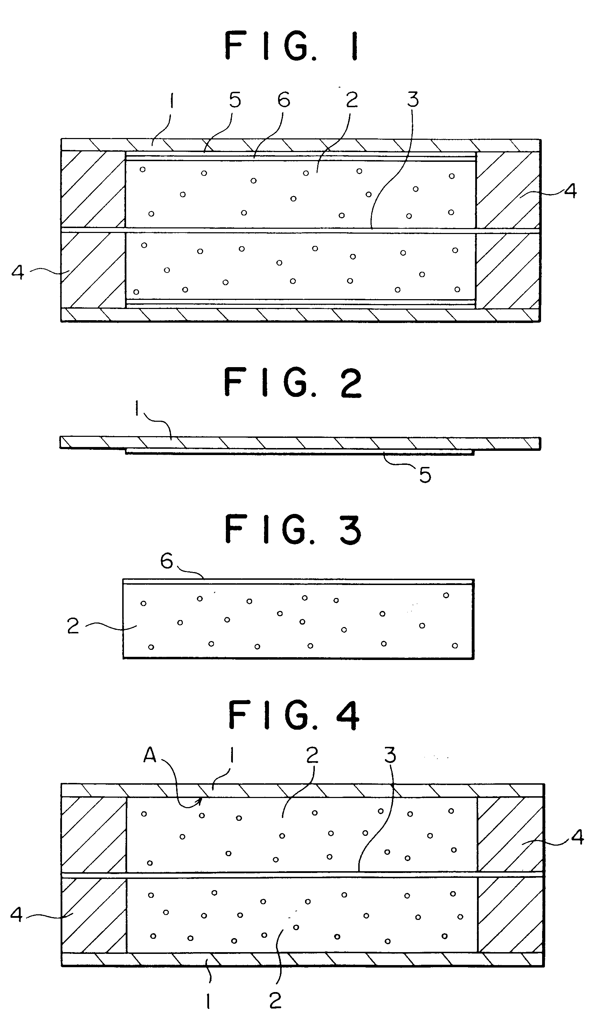

A conventional electrical double-layer capacitor cell is shown in Fig.4. In Fig.4, numeral 1 denotes a collecting electrode, 2 a sintered polarising electrode, 3 a separator, 4 a gasket, and A a contact part of the collector electrode 1 and the sintered polarising electrode 2.

For the collector electrode 1 is used, for example, a conductive rubber sheet, and for the gasket 4 is used, for example, non-conductive rubber. Also, for the separator 3 is used, for example, a polypropylene porous film.

The sintered polarising electrode 2 is one which is made of active carbon particles and having the form of a solid plate which is impregnated with an electrolytic liquid (for example, dilute sulfuric acid). A different type of the electrode 2 is known which is brought into a paste-like form by mixing active carbon particles and the electrolytic liquid. However, the present invention relates to an electrical double-layer capacitor cell using a polarising electrode having a solid plate-like shape and being sintering in the manner as described above.

The gasket 4 has in a tube-like shape, and a separator 3 is arranged approximately at the center of the inside to separate upper and lower parts. Then, at the upper and lower sides of the separator 3, the sintered polarising electrodes 2 are positioned, and collecting electrodes 1 are provided in such a manner that they cover the upper and lower surfaces of the sintered polarising electrodes 2 and the gasket 4.

The gasket 4 is adhered to the collecting electrode 1 and the separator 3, and the collecting electrode 1 is in contact with the surface of the sintered polarising electrode 2. The above-described adhesion is carried out by the use of an adhesive agent or by the use of heat melting.

Such an electrical double-layer capacitor cell is known, for example, from Japanese Patent Application Laid-Open No.8753/1974 and No.292612/1987.

However, in an electrical double-layer capacitor cell using the above-described sintered polarising electrodes 2, there is a problem that the contact resistance at the contact part A of the collecting electrode 1 and the sintered polarising electrode 2 is relatively high.

When the surface of the sintered polarising electrode 2 is microscopically seen, it is an uneven surface wherein active carbon particles are protruding at various points. On the other hand, the collecting electrode 1 is a rubber sheet wherein conductive particles are contained.

In the case when both members such as described above are brought into contact, the electrical resistance at the position where the protruding parts of active carbon particles of the sintered polarising electrode 2 are contacting the conductive particles of the collecting electrode 1 becomes small, but at the other parts where such contact does not happen, the electrical resistance is large. Due to this fact, the contact resistance of the whole contact part A can not be made small.

The present invention has the object of solving the problem described above.

The object of the present invention is to diminish the resistance of the contact part of the collecting electrode and the sintered polarising electrode in an electrical double-layer capacitor cell.

In order to attain the above-described object, in the present invention, there is provided an electrical double-layer capacitor cell according to the claim.

These and other objects of the invention will become more apparent from the detailed description and examples which follow.
Fig.1 is a diagram showing the electrical double-layer capacitor cell according to an embodiment of the present invention;
Fig.2 is a diagram showing a collecting electrode evaporated with a conductive metal;
Fig.3 is a diagram showing a sintered polarising electrode evaporated with a conductive metal; and
Fig.4 is a diagram showing a conventional electrical double-layer capacitor cell.

In the following, an embodiment of the present invention will be explained in detail referring to the drawings.

Fig.1 shows an electrical double-layer capacitor cell according to an embodiment of the present invention. Symbols correspond to those of Fig.4. Numeral 5 denotes a conductive metallic evaporated film formed on the surface of the collecting electrode 1, and 6 a conductive metallic evaporated film formed on the surface of the sintered polarising electrode 2.

As the conductive metal to be evaporated, gold (Au), silver (Ag), platinum (Pt), copper (Cu), nickel (Ni), etc can be used. The evaporation is carried out by use of a vacuum evaporation equipment. The metal to be evaporated is put on a evaporating source filament or in a boat, and evaporation is carried out in an atmosphere of the vacuum degree of 5 × 10⁻⁴ to 5 × 10⁻⁵ mm Hg. By the way, the evaporated film may be formed only on the part where the collecting electrode 1 and the sintered polarising electrode 2 are contacting each other.

Since the conductive metallic evaporated film 5 adheres on the active carbon particles of the surface of the collecting electrode 1 solidly, the electrical resistance between the active carbon particles and the conductive metal evaporated film 5 is negligibly small. The electrical resistance between the conductive particles on the surface of the sintered polarising electrode 2 and the conductive metal evaporated film 6 is also small. Also, the surfaces of the conductive metal evaporated films 5 and 6 are generally smooth.

As a result of the fact that the conductive metal evaporated film has been formed in such a manner as described above, the collecting electrode 1 and the sintered polarising electrode 2 have a smooth and uniformly extended conductive metal film on the surface of the contact part thereof. Since the contact of the collecting electrode 1 and the sintered polarising electrode 2 is effected by the conductive metal films, the contact resistance becomes extremely small.

## Claims

1. An electrical double-layer capacitor having a collecting electrode (1) and a polarising electrode (2) which are contacted with each other via a conductive metal layer formed between opposite surfaces of the electrodes, characterised in that the layer consists of two metal evaporated films (5, 6) each of which being formed on one of the opposite surfaces, the polarising electrode being a sintered body of plate-like shape.

## Patentansprüche

1. Elektrischer Doppelschichtkondensator mit einer Sammelelektrode (1) und einer polarisierenden Elektrode (2), die miteinander über eine leitende Metallschicht, die zwischen gegenüberliegenden Oberflächen der Elektroden ausgebildet ist, kontaktiert sind,
dadurch gekennzeichnet,
daß die Schicht aus zwei aufgedampften Metallschichten (5, 6) besteht, von denen jede auf einer der sich gegenüberliegenden Oberflächen gebildet ist, wobei die polarisierende Elektrode ein gesinterter Körper mit plattenförmiger Gestalt ist.

## Revendications

1. Condensateur électrique à double couche ayant une électrode collectrice (1) et une électrode de polarisation (2) qui sont en contact l'une avec l'autre via une couche de métal conducteur formée entre les surfaces opposées des électrodes, caractérisé en ce que la couche est constituée de deux films de métal vaporisé (5,6), dont chacun est formé sur une des surfaces opposées, l'électrode de polarisation étant un corps fritté en forme de plaque.
